# EUROPEAN PATENT APPLICATION

(11) **EP 1 434 200 A2**
(43) Date of publication of application: **30.06.2004**
(21) Application number: 03025692.9
(22) Date of filing: 07.11.2003
(51) Int. Cl.: G11B 7/0037

(54) **Disk reproduction apparatus**

(30) Priority: 24.12.2002 JP 2002372380
(71) Applicant: Kabushiki Kaisha Toshiba, Tokyo (JP)
(72) Inventor: Nakamura, Kouichi, Int. Prop. Div., Minato-ku Tokyo 105-8001 (JP); Miyazaki, Yoshinobu, Int. Prop. Div., Minato-ku Tokyo 105-8001 (JP)
(74) Representative: Henkel, Feiler & Hänzel

(57) **Abstract**

The present invention includes a shooting portion (14) configured to shoot a surface of a disk (15) and output video data, a storage portion (17) configured to store the video data output from the shooting portion (14), a display portion (18) configured to perform video display based on the video data stored in the storage portion (17), and an output portion (19) configured to digitally output the video data stored in the storage portion (17) to the outside.

## Description

The present invention relates to a disk reproduction apparatus which reproduces data from a disk recording medium.

As is well known, nowadays, there has been placed on the market a disk reproduction apparatus which reproduces data recorded on an optical disk, e.g., a CD (Compact Disk), an LD (Laser Disk), a V(video)-CD and a DVD (Digital Versatile Disk).

This type of disk reproduction apparatus reads recorded data through an optical pickup while driving to rotate an optical disk when this optical disk is attached, and applies predetermine signal processing to reproduce the read data, thereby reproducing video and audio.

Meanwhile, such a disk reproduction apparatus has a structure that attachment and removal of an optical disk are carried out through a disk tray set so as to be capable of being inserted/pulled to/from an apparatus main body.

That is, when an optical disk is attached to the disk reproduction apparatus, the disk tray is taken out from the apparatus main body, the optical disk is placed on the disk tray, and the disk tray is then accommodated in the apparatus main body.

Further, when taking out an optical disk from the disk reproduction apparatus, the disk tray is taken out from the apparatus main body, the optical disk placed on the disk tray is removed, and the disk tray is then accommodated in the apparatus main body.

Meanwhile, in the disk reproduction apparatus having such a disk tray, when the disk tray is accommodated in the apparatus main body, a user cannot visually confirm from the outside of the apparatus main body whether an optical disk has been placed on the disk tray.

Therefore, of the disk reproduction apparatuses, there has emerged a model having a window formed in the apparatus main body, by which a user can visually confirm presence/absence, a rotating state and others of the optical disk.

On the other hand, label information such as a title is printed on the surface of the optical disk. However, when the optical disk is loaded in the disk reproduction apparatus and driven to rotate at a high speed, even if a user visually confirms from the above-described window, he/she can simply confirm that the optical disk is rotating but cannot read the label information on the optical disk.

It is to be noted that Jpn. Pat. Appln. KOKAI Publication No. 3-286470 discloses a structure that a see-through window is provided to a cover of a disk reproduction apparatus and a luminous body which illuminates a disk surface is caused to blink in accordance with the rotation cycle of the disk, thereby enabling a user to read characters or pictures of the rotating disk with the naked eye.

Furthermore, Jpn. Pat. Appln. KOKAI Publication No. 2001-35072 discloses a structure that a liquid crystal shutter is set to a cover body of a CD player and this liquid crystal shutter is caused to enter a light transmission state in accordance with the rotation cycle of the disk, thereby enabling a user to visually confirm information on a label surface of the rotating disk.

However, the techniques disclosed in these publications are just the structures by which a user visually checks an actual disk loaded in the disk reproduction apparatus, and they do not dwell on a level which enables a user to positively exploit the label information printed on the disk surface.

It is an object of an embodiment of the present invention to provide a disk reproduction apparatus which readily enables visual confirmation of label information of a rotating disk and can effectively urge positive utilization of that label information.

According to an aspect of the present invention, there is provided a disk reproduction apparatus comprising: a shooting portion configured to shoot a surface of a disk and output video data; a storage portion configured to store the video data output from the shooting portion; a display portion configured to perform video display based on the video data stored in the storage portion; and an output portion configured to digitally output the video data stored in the storage portion to the outside.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing an embodiment according to the present invention, which illustrates a DVD player;
FIG. 2 is a block diagram illustrating a signal processing system of the DVD player in the same embodiment;
FIG. 3 is a flowchart illustrating an operation when disk loading is performed in the same embodiment; and
FIG. 4 is a flowchart illustrating an operation when disk unloading is performed in the same embodiment.

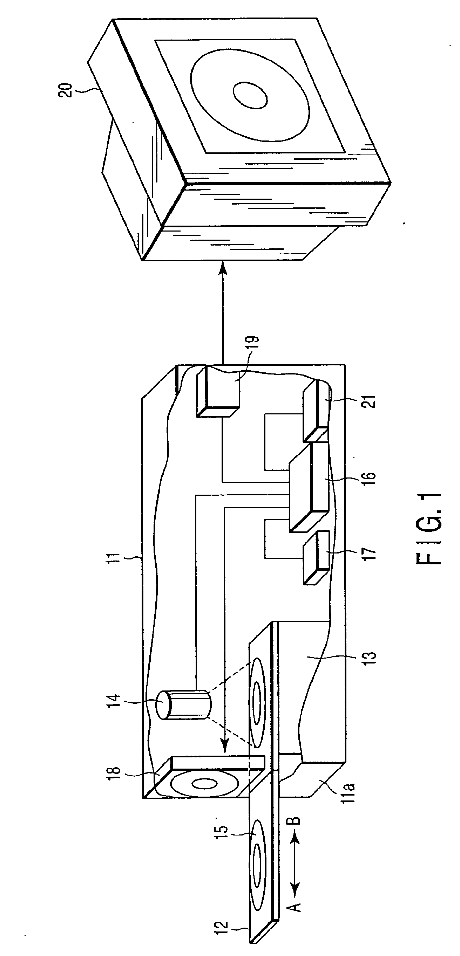

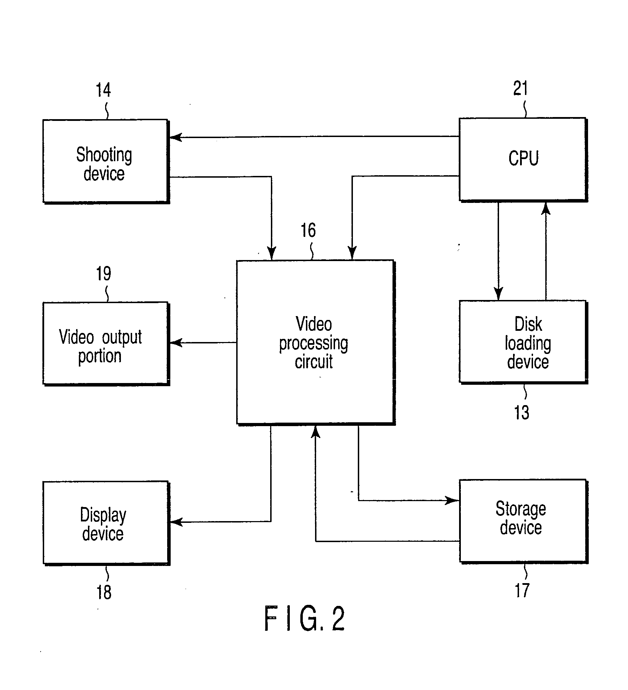

An embodiment according to the present invention will now be described in detail hereinafter with reference to the accompanying drawings. FIGS. 1 and 2 respectively show a DVD player 11 as a disk reproduction apparatus described in this embodiment.

This DVD player 11 supports a disk tray 12 so as to be retractable with respect to its front panel 11a in directions indicated by arrows A and B. This disk tray 12 is controlled to be in a pulled state and an inserted state by a disk loading device 13.

Moreover, this DVD player 11 has a shooting device 14 set at a position opposed to the disk tray 12 which is accommodated in the DVD player 11. This shooting device 14 has a function to shoot an optical disk 15 mounted on the disk tray 12 and output the result as digital video data.

The digital video data output from this shooting device 14 is supplied to a video processing circuit 16 where predetermined signal processing is applied to this data, and then stored in a storage device 17. Additionally, the video processing circuit 16 reads the digital video data from the storage device 17, and displays it in a display device 18 consisting of a liquid crystal set on the front panel 11a.

Further, the video processing circuit 16 reads the digital video data from the storage device 17, applies compression encoding processing and the like to this data, and outputs the result to a video output portion 19. This video output portion 19 outputs the input digital video data to an external monitor 20 where a video image is displayed.

Here, the disk loading device 13, the shooting device 14 and the video processing circuit 16 are integrally controlled by a CPU (Central Processing Unit) 21.

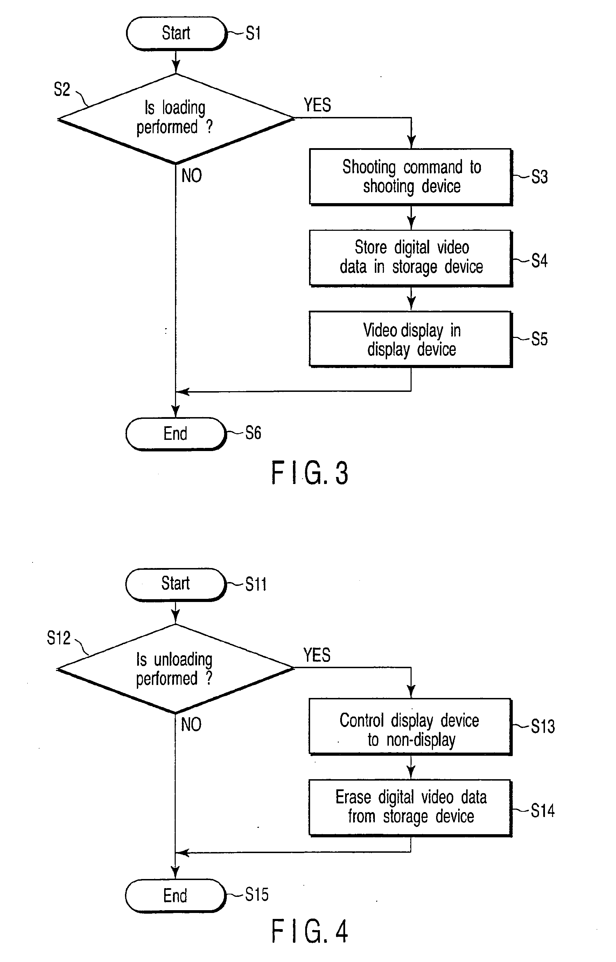

A characteristic operation in the above-described structure will now be explained. FIG. 3 is a flowchart summing up operation when the disk tray 12 is pulled to the outside of the DVD player 11, the optical disk 15 is loaded and this tray is retracted inside the DVD player 11, i.e., when disk loading is performed.

First, when started (step S1), the CPU 21 monitors the disk loading device 13 and judges whether a disk loading operation is carried out at step S2. Then, when the CPU 21 determines that the disk loading operation is not carried out (NO), the processing is terminated (step S6).

Furthermore, when it is determined that the disk loading operation is carried out at step S2 (YES), the CPU 21 issues a shooting command to the shooting device 14 at step S3. Therefore, the surface of the optical disk 15 mounted on the disk tray 12 is shot by the shooting device 14.

Thereafter, at step S4, the CPU 21 applies predetermined signal processing to the digital video data output from the shooting device 14 by the video processing circuit 16, and stores a result in the storage device 17.

Then, at step S5, the CPU 21 reads the digital video data from the storage device 17, applies predetermined signal processing to this data by the video processing circuit 16, and displays the result on the display device 18.

FIG. 4 is a flowchart summing up operation when the disk tray 12 which has the optical disk 15 mounted thereon and is accommodated in the DVD player 11 is pulled to the outside of the DVD player 11, i.e., when disk unloading is carried out.

First, when started (step S11), the CPU 21 monitors the disk loading device 13 and judges whether the disk unloading operation is carried out at step S12. Then, when the CPU 21 determines that the disk unloading operation is not performed (NO), the processing is terminated (step S15).

Furthermore, when it is determined that the disk unloading operation is carried out at step S12 (YES), the CPU 21 controls the display device 18 to a non-display state at step S13, erases the digital video data stored in the storage device 17 at step S14, thereby terminating the processing (step S15).

According to the above-described embodiment, first, when the optical disk 15 is loaded, its surface is automatically shot, the obtained digital video data is stored, and the stored digital video data is video-displayed. As a result, even if the optical disk 15 is driven to rotate, its label information can be readily visually confirmed.

It is to be noted that the timing with which the shooting device 14 shoots the surface of the optical disk 15 is controlled to be carried out when the optical disk 15 is still in a stationary state after being loaded but yet to be driven to rotate.

Moreover, the digital video data obtained from the shooting device 14 is held in the storage device 17 until the disk unloading operation is carried out, and it is erased from the storage device 17 when the disk unloading operation is performed.

Therefore, even if, e.g., a power supply switch is turned off with the optical disk 15 being attached, the label information of the optical disk 15 can be displayed by again turning on the power supply switch as long as the disk unloading operation is not carried out.

Here, in the above-descried embodiment, the digital video data stored in the storage device 17 can be read, and it can be digitally output to the outside through the video processing circuit 16 and a video output portion 19.

Therefore, the label information of the optical disk 15 can be enlarged and displayed by a monitor 20. Additionally, when a PC (Personal Computer) or the like is connected outside, the label information can be edited, and a user can be effectively urged to positively utilize the label information.

Further, in the above embodiment, description has been given taking a DVD player 11 as an example, but the present invention is not restricted to a DVD player, and it can be extensively applied to an apparatus which can reproduce a disk storage medium such as a magnetic optical disk or a magnetic disk.

It is to be noted that the present invention is not restricted to the foregoing embodiment as it is, and constituent elements can be modified and embodied in many ways without departing from the scope of the invention on an embodying stage. Furthermore, appropriately combining a plurality of the constituent elements disclosed in the foregoing embodiment can form various kinds of inventions. For example, some constituent elements may be deleted from all the constituent elements disclosed in the embodiment.

## Claims

1. A disk reproduction apparatus **characterized by** comprising:
a shooting portion (14) configured to shoot a surface of a disk (15) and output video data;
a storage portion (17) configured to store the video data output from the shooting portion (14);
a display portion (18) configured to perform video display based on the video data stored in the storage portion (17); and
an output portion (19) configured to digitally output the video data stored in the storage portion (17) to the outside.

2. A disk reproduction apparatus according to claim 1, **characterized by** further comprising:
a control portion (21) configured to cause the shooting portion (14) to perform a shooting operation until the disk (15) is driven to rotate after being loaded.

3. A disk reproduction apparatus according to claim 1, **characterized by** further comprising:
a control portion (21) configured to erase the video data stored in the storage portion (17) in a state that the optical disk (15) is unloaded.

4. A disk reproduction apparatus according to claim 1, **characterized by** further comprising:
a first control portion (21) configured to cause the shooting portion (14) to perform a shooting operation until the disk (15) is driven to rotate after being loaded; and
a second control portion (21) configured to erase the video data stored in the storage portion (17) in a state that the disk (15) is unloaded.

5. A disk reproduction apparatus according to claim 1, **characterized by** further comprising:
a disk loading portion (13) configured to control a disk tray (12) to be pulled/inserted with respect to an apparatus main body; and
a control portion (21) configured to cause the shooting portion (14) to perform a shooting operation when the disk tray (12) is controlled to an inserted state from the pulled state by the disk loading portion (13).

6. A disk reproduction apparatus according to claim 1, **characterized by** further comprising:
a disk loading portion (13) configured to control a disk tray (12) to be pulled/inserted with respect to an apparatus main body; and
a control portion (21) configured to erase the video data stored in the storage portion (17) when the disk tray (12) is controlled to the pulled state from the inserted state by the disk loading portion (13).

7. A disk reproduction apparatus according to claim 1, **characterized by** further comprising:
a disk loading portion (13) configured to control a disk tray (12) to be pulled/inserted with respect to an apparatus main body;
a first control portion configured to cause the shooting portion (14) to perform a shooting operation when the disk tray (12) is controlled to the inserted state from the pulled state by the disk loading portion (13); and
a second control portion (21) configured to erase the video data stored in the storage portion (17) when the disk tray (12) is controlled to the pulled state from the inserted state by the disk loading portion (13).
